# EUROPÄISCHE PATENTSCHRIFT

(11) **EP 2 718 234 B1**
(45) Veröffentlichungstag und Bekanntmachung des Hinweises auf die Patenterteilung: **06.05.2015**
(21) Anmeldenummer: 11724231.3
(22) Anmeldetag: 09.06.2011
(51) Int. Cl.: C02F 1/44, B01D 61/14, B01D 65/02, B01D 61/16, C02F 1/68, C02F 1/76, C02F 1/52

(54) **MOBILE WASSERAUFBEREITUNGSANLAGE UND VERFAHREN ZUM ERZEUGEN VON TRINKWASSER IN EINEM KATASTROPHENGEBIET**
MOBILE WATER TREATMENT PLANT AND METHOD FOR PRODUCING POTABLE WATER IN A DISASTER AREA
INSTALLATION MOBILE DE TRAITEMENT DE L'EAU ET PROCÉDÉ POUR LA PRODUCTION D'EAU POTABLE DANS UNE ZONE SINISTRÉE

(43) Veröffentlichungstag der Anmeldung: 16.04.2014
(73) Patentinhaber: Kärcher Futuretech GmbH, 71364 Winnenden (DE)
(72) Erfinder: HERMANN, Axel, 71364 Winnenden (DE); WEIBLE, Frank, 74366 Kirchheim (DE)
(74) Vertreter: Witte, Weller & Partner Patentanwälte mbB
(86) Internationale Anmeldenummer: PCT/EP2011/059622
(87) Internationale Veröffentlichungsnummer: WO 2012/167829

(56) Entgegenhaltungen:
- EP-A1- 2 184 095
- WO-A2-2007/148367
- JP-A- 2007 330 916
- US-A1- 2008 041 793

## Beschreibung

Die vorliegende Erfindung betrifft eine mobile Wasseraufbereitungsanlage zum Erzeugen von Trinkwasser in einem Katastrophengebiet sowie ein entsprechendes Verfahren.

Es gibt bereits verschiedene mobile Wasseraufbereitungsanlagen für Einsätze in Katastrophengebieten, etwa nach einem Erdbeben oder einer Überschwemmung. EP 1 690 579 A1 beschreibt eine solche Anlage mit drei Filtereinheiten, die zeitgleich oder wechselweise verwendet werden können, um (schmutziges) Rohwasser zu filtern. Jede Filtereinheit besitzt eine Vielzahl von Filamentfasern, die in zwei relativ zueinander verdrehbaren Haltern befestigt sind. Durch gegenseitiges Verdrehen der Halter legen sich die Filamentfasern zunehmend fester um ein perforiertes Innenrohr, und sie bilden somit ein Filterelement, das zum Filtern des Rohwassers dient. Ein Entspannen der Filamentfasern ermöglicht eine effektive Reinigung des Filterelements, insbesondere bei einer Rückspülung mit unfiltriertem Rohwasser. Die bekannte Anlage ist relativ einfach und robust, um einen zuverlässigen Betrieb unter schwierigen Einsatzbedingungen in einem Katastrophengebiet zu ermöglichen. Allerdings ist die bekannte Filteranlage lediglich als Vorstufe für eine nachfolgende Umkehrosmoseanlage vorgesehen. Die Umkehrosmoseanlage ermöglicht die Gewinnung von keimfreiem Trinkwasser einschließlich der Entsalzung und/oder Entfernung von gelösten Schadstoffen wie Schwermetallen etc. Es hat sich jedoch gezeigt, dass die bekannte Anlage nicht für alle Einsatzszenarien in einem Katastrophenfall geeignet ist, da der Transport der Anlage an einen gewünschten Einsatzort in einem Katastrophengebiet trotz der bereits erreichten Mobilität immer noch problematisch ist. Zum Transport der Anlage werden Fahrzeuge und befahrbare Wege benötigt, die nach einem starken Erdbeben oder einer Flutkatastrophe manchmal nicht zur Verfügung stehen.

Auch andere mobile Wasseraufbereitungsanlagen zum Erzeugen von Trinkwasser in einem Katastrophengebiet leiden unter diesem Nachteil. Wenngleich die bekannten Anlagen insofern mobil sind, als dass sie einen Transport in ein Katastrophengebiet ermöglichen, benötigt man für die "letzten Kilometer" zum Einsatzort und für den Aufbau am Einsatzort Kraftfahrzeuge und/oder maschinelle Hebewerkzeuge, da die einzelnen Anlagenteile für eine Verladung ohne solche Hilfsmittel zu schwer sind. Beispielsweise ist unter der Bezeichnung "TWA 15 UF" eine mobile Trinkwasseraufbereitungsanlage von der Firma Veolia Water Solutions & Technologies bzw. deren verbundenem Unternehmen VWS Deutschland GmbH bekannt, die aus einer Vielzahl von Modulen besteht, wobei jedes einzelne Modul nur mit geeignetem Hebewerkzeug bewegt werden kann. Andere mobile Anlagen sind auf Kfz-Anhängern oder in Containern aufgebaut, die nur mit schweren Kraftfahrzeugen bewegt werden können.

DE 197 31 177 C1 offenbart eine mobile Anlage zur Aufbereitung von Gülle, wobei sowohl eine Ultrafiltration als auch eine Umkehrosmose zur Anwendung kommen. Auch diese Anlage ist in einem Normcontainer aufgebaut, der nur unter Einsatz von entsprechenden Hebewerkzeugen und/oder Fahrzeugen bewegt werden kann. Die Ultrafiltration erfolgt mit Hilfe von zwei parallel zueinander angeordneten Querstrom-Filtereinheiten, die jeweils eine Vielzahl von seriell hintereinander angeordneten Querstrom-Filterelementen besitzen.

DE 37 19 675 A1 offenbart eine Aufbereitungsanlage für Reinwasser in Modulbauweise, die ebenfalls eine Vorfilterung und eine Umkehrosmose beinhaltet. Diese bekannte Anlage ist eher für eine stationäre Verwendung in einem Wohngebäude oder dergleichen gedacht.

Ein anderes Beispiel ist das Dokument US 2008/041 793, das auch eine mobile Wasseraufbereitungsanlage offenbart. Diese Wasseraufbereitungsanlage wäre auch geeignet zum Erzeugen von Trinkwasser in einem Katastrophengebiet.

Ein generelles Problem bei der Entwicklung einer mobilen Wasseraufbereitungsanlage zum Erzeugen von Trinkwasser in einem Katastrophengebiet sind die gegensätzlichen Anforderungen, die sich aus der gewünschten Leistungsfähigkeit der Anlage einerseits und aus dem Wunsch nach einem geringen Gesamtgewicht und einer guten Transportierbarkeit andererseits ergeben. Bisher sind keine mobilen Wasseraufbereitungsanlagen bekannt, die im Notfall auch von Hand oder mit Hilfe von "unkonventionellen" Transportmitteln, wie etwa Eselkarren, transportiert und aufgebaut werden können, und die andererseits die Erzeugung von trinkbarem Wasser in einer Menge ermöglichen, mit der mehrere tausend Menschen zumindest übergangsweise versorgt werden können.

Vor diesem Hintergrund ist es eine Aufgabe der vorliegenden Erfindung, eine mobile Wasseraufbereitungsanlage und ein entsprechendes Verfahren anzugeben, die diese gegensätzlichen Anforderungen in möglichst effizienter Weise erfüllen.

Gemäß einem Aspekt der Erfindung wird daher eine mobile Wasseraufbereitungsanlage zum Erzeugen von Trinkwasser in einem Katastrophengebiet vorgeschlagen, mit einem Rohwassereinlass zum Zuführen von Rohwasser, mit einer ersten Filtereinheit, die ein Filterelement zum Filtern des Rohwassers, einen ersten und einen zweiten Rohwasseranschluss auf einer Rohwasserseite des Filterelements und einen ersten Filtratanschluss auf einer Filtratseite des Filterelements aufweist, mit einer Filterpumpe, die zwischen dem Rohwassereinlass und dem Filterelement angeordnet ist, mit einem Trinkwasserauslass, der mit dem Filtratanschluss verbunden ist, mit einer Steuereinheit, die die Filterpumpe in einem Filtrationsbetrieb ansteuert, um das Rohwasser durch das Filterelement zu pressen, mit einem verstellbaren Dreiwegestellglied, das einen ersten, einen zweiten und einen dritten Ventilanschluss aufweist, und mit einem separaten Rohwasserauslass, wobei der erste Ventilanschluss mit dem ersten Rohwasseranschluss der Filtereinheit verbunden ist, wobei der zweite Ventilanschluss mit dem Rohwasserauslass verbunden ist, und wobei der dritte Ventilanschluss mit einer ersten Rohwasserleitung verbunden ist, die von der Filterpumpe zu dem zweiten Rohwasseranschluss der Filtereinheit führt.

Gemäß einem weiteren Aspekt wird ein Verfahren zum Erzeugen von Trinkwasser in einem Katastrophengebiet vorgeschlagen, mit den Schritten: Bereitstellen einer mobilen Wasseraufbereitungsanlage der zuvor genannten Art, Filtern des Rohwassers mit der mobilen Wasseraufbereitungsanlage in einem Filtrationsbetrieb bis zu einem definierten Betriebszustand, der eine spezielle Reinigung des Filterelements erfordert, Kurzschließen des Rohwassereinlasses und des Rohwasserauslasses mit einer dritten Rohwasserleitung, um einen Zirkulationspfad von dem Rohwassereinlass über die Filterpumpe, den zweiten und den ersten Rohwasseranschluss und das Dreiwegestellglied zum Rohwasserauslass zu schaffen, und Betreiben der Filterpumpe, um das Filterelement mit ungefiltertem Rohwasser im Zirkulationsbetrieb zu reinigen.

Die Filtereinheit der neuen Aufbereitungsanlage ist vorzugsweise eine Dead-End-Filtereinheit, das heißt eine Filtereinheit, bei der das zu reinigende Rohwasser vollständig durch das Filterelement gepresst wird. Im Gegensatz dazu verwenden viele bekannte mobile Anlagen Querstromfilter, da diese prinzipbedingt einen geringeren Filterkuchen bilden und dementsprechend weniger Probleme mit Verschmutzung des Filterelements haben. Ein Dead-End-Filter ermöglicht jedoch eine höhere Ausbeute bei vergleichsweise geringen räumlichen Abmessungen des Filterelements. Dementsprechend trägt die Verwendung einer Filtereinheit mit einem Dead-End-Filterelement zu der gewünschten kompakten Bauform bei.

Allerdings lagern sich die abgeschiedenen Schmutzteilchen bei einer Dead-End-Filtereinheit auf dem Filterelement ab und führen relativ schnell zu einer Verstopfung des Filterelements. Daher benötigt die neue Wasseraufbereitungsanlage einen effizienten Reinigungsmechanismus für das Filterelement, der unter den schwierigen Einsatzbedingungen in einem Katastrophengebiet zuverlässig funktioniert und einfach zu bedienen ist. Genau darin liegt der entscheidende Vorteil der neuen Wasseraufbereitungsanlage. Grundsätzlich kann das neue Konzept jedoch auch in Kombination mit Querstromfilterelementen eingesetzt werden.

Die neue Wasseraufbereitungsanlage besitzt zum einen eine Filtereinheit mit zumindest drei Anschlüssen, von denen zwei auf der Rohwasserseite des Filterelements liegen. Der dritte Anschluss auf der Filtratseite des Filterelements dient zum Abführen des gefilterten Wassers. Die zwei Anschlüsse auf der Rohwasserseite des Filterelements ermöglichen eine einfache Grobreinigung des Filterelements mit einem Spülvorgang in Vorwärtsrichtung, das heißt mit einem Spülstrom, der von der Rohwasserseite auf das Filterelement einwirkt. Das Dreiwegestellglied ermöglicht diesen Spülstrom, ohne dass zu diesem Zweck die Verrohrung geändert werden muss. Daher ist das Abspülen des Filterkuchens in Stromrichtung nahezu jederzeit während des Filterbetriebs möglich. In bevorzugten Ausführungsbeispielen erfolgt ein Spülgang in Vorwärtsrichtung automatisch während des Filterbetriebs, sobald ein Differenzdruck über dem Filterelement einen definierten Schwellenwert übersteigt.

Die neue Aufbereitungsanlage ermöglicht daher einen effizienten Automatikbetrieb, wobei ein sich am Filterelement bildender Filterkuchen jederzeit mit ungefiltertem Rohwasser abgespült werden kann.

Darüber hinaus ermöglicht die neue Aufbereitungsanlage jedoch eine weitere Reinigung des Filterelements durch Rückspülen, das heißt mit Hilfe von - vorzugsweise gereinigtem - Wasser, das in umgekehrter Richtung durch das Filterelement gepresst wird. Ein sich auf dem Filterelement bildender Filterkuchen kann also mit zwei unterschiedlichen Strömen abgespült werden, was eine verbesserte Reinigung des Filterelements ermöglicht.

Die beiden Spülvarianten für das Filterelement lassen sich bei der neuen Aufbereitungsanlage vorteilhaft miteinander kombinieren und aufgrund des Dreiwegestellgliedes automatisch in den Betrieb der Aufbereitungsanlage integrieren, so dass sich die Reinigungsintervalle an die jeweiligen Einsatzbedingungen anpassen lassen. Dies trägt zu einer langen Nutzung und einer hohen Ausbeute bei. Besonders vorteilhaft sind die verschiedenen Reinigungsmöglichkeiten, wenn das Filterelement eine Ultrafiltration ermöglicht, das heißt wenn die Porengröße des Filterelements kleiner ist als 0,1 µm. Wie sich gezeigt hat, lassen sich mit einer solchen Ultrafiltration nämlich Filterergebnisse erreichen, die eine Trinkwasserqualität auch ohne die bisher übliche Verwendung einer Umkehrosmoseanlage ermöglichen. Dementsprechend verzichtet die neue Wasseraufbereitungsanlage in den bevorzugten Ausführungsbeispielen auf eine Umkehrosmoseanlage, das heißt die Reinigung des Rohwassers beschränkt sich im Wesentlichen auf eine mechanische Filterung sowie eine bevorzugte Desinfektion des Filtrats mit Hilfe von Chlor oder Ähnlichem.

Die neue Aufbereitungsanlage ermöglicht darüber hinaus eine sehr einfache und wirkungsvolle Intensivreinigung des Filterelements mit Hilfe des neuen Verfahrens. Das Kurzschließen des Rohwassereinlasses und des Rohwasserauslasses ermöglicht es, einen Zirkulationspfad auf der Rohwasserseite des Filterelements zu realisieren, in dem eine Reinigungsflüssigkeit zirkulieren kann, um einen Filterkuchen oder Reste eines Filterkuchens gegebenenfalls mit chemischen Reinigungsmitteln in einem geschlossenen Umlauf zu entfernen. Aufgrund des Rohwasserauslasses, der bei der neuen Wasseraufbereitungsanlage zusätzlich zum Rohwassereinlass auf der Rohwasserseite des Filterelements vorgesehen ist, kann der Kurzschluss für den geschlossenen Zirkulationspfad sehr einfach realisiert werden. Außerdem kann die für den Filtrierbetrieb genutzte Filterpumpe gleichermaßen auch die Zirkulation der Reinigungsflüssigkeit während der Intensivreinigung bewirken. Eine zusätzliche Pumpe für eine Intensivreinigung des Filterelements kann entfallen, was zu einer leichten und kompakten Bauform beiträgt.

Insgesamt ermöglicht die neue Wasseraufbereitungsanlage eine effiziente Filterung von verschmutztem Rohwasser, um auf diese Weise Trinkwasser zur Versorgung einer großen Anzahl von Menschen in einem Katastrophengebiet zu erzeugen. Aufgrund der neuen Bauform und der effizienten und unkomplizierten Reinigungsmöglichkeiten kann die neue Aufbereitungsanlage andererseits sehr kompakt und mit einem geringeren Gewicht im Vergleich zu bisherigen mobilen Anlagen realisiert werden. In bevorzugten Ausführungsbeispielen, die nachfolgend noch im Detail näher erläutert werden, besteht die neue Wasseraufbereitungsanlage aus mehreren Modulen, die getrennt voneinander transportiert werden können und zur Inbetriebnahme der Anlage miteinander verbunden werden, wobei jedes einzelne Modul weniger als 100 kg wiegt, so dass es im Notfall auch ohne maschinelle Hebewerkzeuge von Hand transportiert werden kann, indem beispielsweise vier Personen zusammen das jeweilige Modul tragen. Die oben genannte Aufgabe ist daher vollständig gelöst.

In einer bevorzugten Ausgestaltung steuert die Steuereinheit außerdem das Dreiwegestellglied an, um von dem Filtrationsbetrieb zu einem Filterreinigungsbetrieb umzuschalten.

Wie bereits oben angedeutet, besitzt diese Ausgestaltung den Vorteil, dass eine Filterreinigung automatisch durchgeführt werden kann, ohne dass ein manueller Eingriff notwendig ist. Die Steuereinheit löst eine Filterreinigung in den bevorzugten Ausführungsbeispielen automatisch aus, wenn sich ein gewisser Filterkuchen auf dem Filterelement gebildet hat, wobei die Erzeugung von Trinkwasser jeweils nur relativ kurz für den Reinigungsvorgang unterbrochen wird.

In einer weiteren Ausgestaltung besitzt die mobile Wasseraufbereitungsanlage einen Vorfilter mit einem Vorfiltereingang und einem Vorfilterausgang, wobei der Vorfiltereingang mit einer zweiten Rohwasserleitung verbunden ist, die zu der Filterpumpe führt, und wobei der Vorfilterausgang mit der ersten Rohwasserleitung verbunden ist. In bevorzugten Ausführungsbeispielen besitzt der Vorfilter ein längliches Gehäuse, insbesondere in Zylinderform, in das ein austauschbarer Filterbeutel eingehängt ist. Des Weiteren ist es bevorzugt, wenn die Rohrleitungen zwischen dem Vorfilterausgang und dem Dreiwegestellglied fest sind, das heißt sie müssen am Einsatzort nicht erst hergestellt werden.

Ein solcher Vorfilter ist von Vorteil, um sehr grobe Verunreinigungen auszufiltern, bevor sie das feinporige Filterelement erreichen, das im Wesentlichen für die Erzeugung des Trinkwassers verantwortlich ist. Der Vorfilter ermöglicht einen längeren und effizienteren Betrieb des Filterelements und damit eine höhere Ausbeute.

In einer weiteren bevorzugten Ausgestaltung weist der Vorfilter eine Öffnung zum Einfüllen eines vorzugsweise chemischen Reinigungsmittels auf. In bevorzugten Ausführungsbeispielen besitzt der Vorfilter einen Deckel, mit dem die genannte Öffnung im Betrieb der Anlage verschließbar ist.

Diese Ausgestaltung ermöglicht eine weitere vorteilhafte Gewichtsreduktion im Vergleich zu bekannten mobilen Anlagen, die eine Intensivreinigung eines Filterelements mit Hilfe von chemischen Reinigungsmitteln ermöglichen. In vorteilhafter Weise erfüllt der Vorfilter hier eine Doppelfunktion, indem er im Intensivreinigungsbetrieb als Behälter zur Aufnahme des Reinigungsmittels dient.

In einer weiteren Ausgestaltung besitzt die mobile Wasseraufbereitungsanlage ferner eine dritte Rohwasserleitung, die dazu ausgebildet ist, den Rohwassereinlass und den Rohwasserauslass kurzzuschließen.

Wie bereits weiter oben angedeutet, ermöglicht diese Ausgestaltung eine sehr vorteilhafte Intensivreinigung des Filterelements, indem eine Reinigungsflüssigkeit auf der Rohwasserseite des Filterelements zirkuliert. Besonders vorteilhaft ist diese Ausgestaltung in Kombination mit der zuvor genannten Ausgestaltung, wonach der Vorfilter als Aufnahmebehälter für ein Reinigungsmittel dient, da der Vorfilter in dem Zirkulationspfad enthalten ist. Die Filterpumpe, die im Filtrationsbetrieb das Rohwasser durch das Filterelement drückt, kann hier vorteilhaft zum Umwälzen der Reinigungsflüssigkeit verwendet werden. Die Ausgestaltung ermöglicht mit geringem Aufwand eine sehr effiziente Intensivreinigung des Filterelements. Außerdem wird durch die Mehrfachnutzung der verwendeten Komponenten eine kompakte und relativ leichte Konstruktion erreicht.

In einer weiteren Ausgestaltung besitzt die mobile Wasseraufbereitungsanlage eine Rückspülpumpe, die zwischen dem Filtratanschluss der Filtereinheit und dem Trinkwasserauslass angeordnet ist.

Alternativ oder ergänzend hierzu könnte prinzipiell auch die Filterpumpe für eine Rückspülung der Filtereinheit verwendet werden. Eine zusätzliche Rückspülpumpe besitzt demgegenüber den Vorteil, dass ein Rückspülen automatisch im Filtrationsbetrieb durchgeführt werden kann, ohne dass ein manueller Eingriff und/oder ein Umbau der Anlage erforderlich sind. Die Ausgestaltung trägt daher zu einem sehr effizienten Betrieb mit hoher Ausbeute bei.

In einer weiteren Ausgestaltung besitzt die mobile Wasseraufbereitungsanlage ferner ein Absperrglied, das den Filtratanschluss wahlweise schließt. In den bevorzugten Ausführungsbeispielen wird der Filtratanschluss insbesondere luftdicht verschlossen, wenn das Filterelement unter Verwendung der oben genannten Kurzschlussleitung intensiv gereinigt wird. Die Zirkulation des Reinigungsmittels auf der Rohwasserseite des Filterelements wird dadurch unterstützt. In einigen Ausführungsbeispielen ist das Absperrglied ein manuell oder automatisch betätigtes Ventil. Alternativ oder ergänzend hierzu kann die oben genannte Rückspülpumpe als Absperrglied fungieren.

In einer weiteren Ausgestaltung besitzt die mobile Wasseraufbereitungsanlage einen Volumenstromsensor, der einen Volumenstrom durch das Filterelement liefert, einen ersten und einen zweiten Drucksensor, die zusammen einen Differenzdruck über dem Filterelement liefern, und einen Zeitmesser, wobei die Steuereinheit dazu ausgebildet ist, die Filterpumpe (und vorzugsweise auch das Drei-wegestellglied) im Filtrationsbetrieb allein in Abhängigkeit von dem Volumenstrom, dem Differenzdruck und definierten Zeitintervallen zu steuern.

In dieser Ausgestaltung liefert der Volumenstromsensor eine Messgröße, die für den Volumenstrom durch das Filterelement repräsentativ ist. In einem bevorzugten Ausführungsbeispiel misst der Volumenstromsensor den Volumenstrom in der ersten Rohwasserleitung, die zum Filterelement führt. Des Weiteren liefern die Drucksensoren Messgrößen, die zusammen für einen Differenzdruck über dem Filterelement repräsentativ sind. In einigen Ausführungsbeispielen liefern die Drucksensoren jeweils Messgrößen, die für einen Druck vor dem Filterelement bzw. nach dem Filterelement repräsentativ sind, wobei erst die Steuereinheit den genannten Differenzdruck anhand der Messgrößen bestimmt.

Bevorzugt steuert die Steuereinheit den Filtrationsbetrieb und intermittierende Reinigungen des Filterelements im wesentlichen automatisch und mit einer individuellen Anpassung an die Rohwasserqualität. Beinhaltet das Rohwasser große Mengen an Schmutzteilchen, bildet sich relativ schnell ein Filterkuchen auf dem Filterelement, so dass Spül- und Reinigungsvorgänge häufig und in kurzen Zeitintervallen benötigt werden. Ist das Rohwasser nur wenig verschmutzt, können die Reinigungszyklen zeitlich weiter auseinander liegen. Der Volumenstrom durch das Filterelement und der Differenzdruck über dem Filterelement sind zwei charakteristische Größen, anhand derer sich der Grad eines Filterkuchens auf dem Filterelement hinreichend gut abschätzen lässt. In bevorzugten Ausgestaltungen verzichtet die neue Wasseraufbereitungsanlage daher auf weitergehende Analyse- und Sensortechnik. Dies ermöglicht eine sehr robuste, leicht bauende und wenig störanfällige Realisierung.

In einer weiteren Ausgestaltung besitzt die mobile Wasseraufbereitungsanlage einen selbsttragenden Gitterrahmen, der zumindest die Steuereinheit und das Dreiwegestellglied umgibt. Vorzugsweise ist der Gitterrahmen an mehreren Seiten offen. In den bevorzugten Ausführungsbeispielen ist der Gitterrahmen allseitig offen.

In diesen Ausgestaltungen definiert der Gitterrahmen eine stabile Außenkontur, die zahlreiche Griffmöglichkeiten zum Transport sowie einen Rammschutz und Auflagepunkte für Spanngurte und dergleichen bietet. In den bevorzugten Ausführungsbeispielen umgibt der Gitterrahmen auch den Vorfilter, einen Chlorbehälter, die erste Rohwasserleitung und/oder die Druck- bzw. Volumenstromsensoren. Der Gitterrähmen bildet zusammen mit der Steuereinheit und den genannten Komponenten ein zentrales Modul der neuen Wasseraufbereitungsanlage, das lediglich noch mit der Filtereinheit, der Filterpumpe und der Rückspülpumpe, soweit erforderlich, ergänzt werden muss. In einigen Ausführungsbeispielen besitzt der Gitterrahmen Aufnahmezapfen für steckbare Räder, die einen Transport nach Art einer Schubkarre ermöglichen. In allen Fällen ist es bevorzugt, wenn das so gebildete Zentralmodul ein Gewicht aufweist, das unterhalb von 100 kg oder allenfalls im Bereich von etwa 100 kg liegt. Diese Ausgestaltungen tragen dazu bei, dass die neue Anlage gegebenenfalls auch ohne maschinelle Hilfe transportiert und verladen werden kann.

In einer weiteren Ausgestaltung weist die erste Filtereinheit einen (weiteren) Gitterrahmen auf, der eine selbsttragende Außenkontur definiert. Vorzugsweise ist auch der weitere Gitterrahmen an mehreren Seiten offen. In einigen bevorzugten Ausführungsbeispielen besitzt der weitere Gitterrahmen und/oder der Gitterrahmen des Zentralmoduls Bolzen, die in entsprechende Öffnungen am jeweils anderen Gitterrahmen eingesteckt werden können, um die Gitterrahmen stabil miteinander zu verbinden. In einigen Ausführungsbeispielen besitzen die Gitterrahmen zusätzlich Gummispanner, um ein unbeabsichtigtes Lösen der Gitterrahmen voneinander zu verhindern. Die Ausgestaltungen tragen zu der gewünschten Mobilität der neuen Anlage bei, und sie ermöglichen insbesondere eine Verladung und einen Transport, ohne dass maschinelle Hebewerkzeuge zwingend benötigt werden.

In einer weiteren Ausgestaltung besitzt die mobile Wasseraufbereitungsanlage eine zweite Filtereinheit mit einem dritten und einem vierten Rohwasseranschluss und einem zweiten Filtratanschluss, wobei der erste und der dritte Rohwasseranschluss parallel geschaltet sind, wobei der zweite und der vierte Rohwasseranschluss parallel geschaltet sind, und wobei der erste und der zweite Filtratanschluss parallel geschaltet sind.

In dieser Ausgestaltung besitzt die neue Anlage zwei Filtereinheiten, die in den bevorzugten Ausführungsbeispielen identisch aufgebaut sind und parallel zueinander zeitgleich betrieben werden können. Die Ausgestaltung ermöglicht eine noch höhere Ausbeute im Parallelbetrieb sowie eine Redundanz der Filtereinheiten, die angesichts der typischerweise schwierigen Bedingungen in einem Katastrophengebiet wünschenswert ist. Es versteht sich, dass die jeweiligen Anschlüsse der beiden Filtereinheiten nur in Betrieb parallel geschaltet sind. Beim Transport sind die Filtereinheiten in den bevorzugten Ausführungsbeispielen voneinander getrennt.

In einer weiteren Ausgestaltung besitzt das Filterelement eine Porengröße von weniger als 0,1 µm, vorzugsweise weniger als 0,01 µm.

Die Filtereinheit ermöglicht in dieser Ausgestaltung eine Ultrafiltration, mit der sich schon ohne nachfolgende Umkehrosmose Trinkwasser in hinreichender Qualität aus einer vorhandenen Süßwasserquelle erzeugen lässt. Ohne Umkehrosmose ist eine Entsalzung oder auch die Entfernung von gelösten Schwermetallen oder dergleichen zwar nicht möglich. In vielen Fällen können diese Nachteile jedoch zumindest für eine gewisse Zeit in Kauf genommen werden, um eine schnelle Soforthilfe in einem Katastrophengebiet zu ermöglichen. Die Ultrafiltration und der Verzicht auf eine Umkehrosmose tragen vorteilhaft zu der guten Transportierbarkeit der neuen Anlage bei.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Darstellung von Teilen eines bevorzugten Ausführungsbeispiels der neuen Wasseraufbereitungsanlage,
- Fig. 2: ein Funktionsblockschaltbild der Anlage aus Fig. 1 in einem Filtrationsbetrieb,
- Fig. 3: ein weiteres Funktionsblockschaltbild der Anlage aus Fig. 1 während eines Spülvorgangs in Vorwärtsrichtung,
- Fig. 4: die Anlage aus den Fig. 1 bis 3 während eines Rückspülvorgangs,
- Fig. 5: die Anlage aus den vorhergehenden Figuren während einer speziellen Intensivreinigung, und
- Fig. 6: ein Detail der Anlage aus Fig. 1.

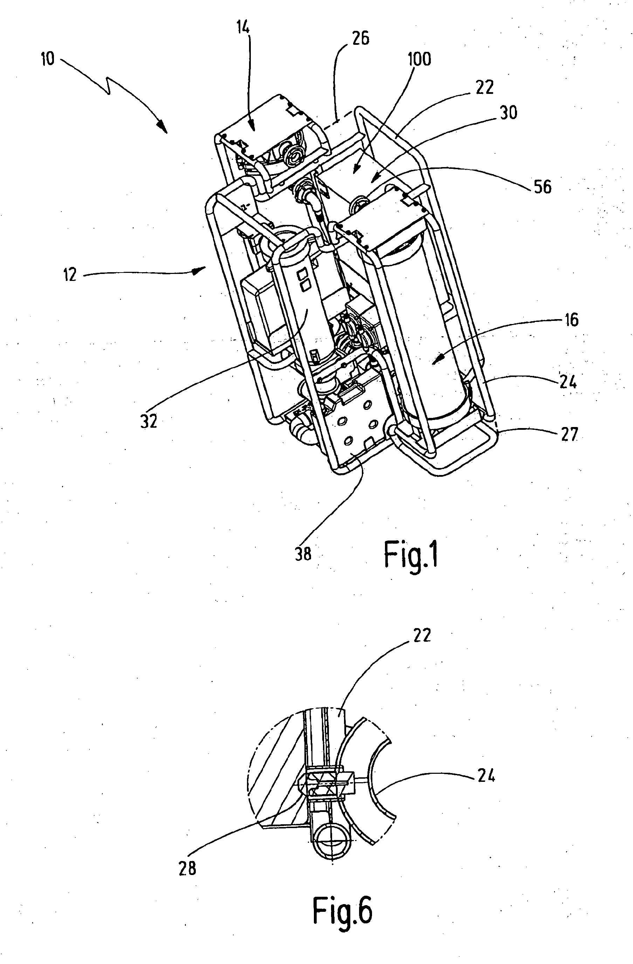

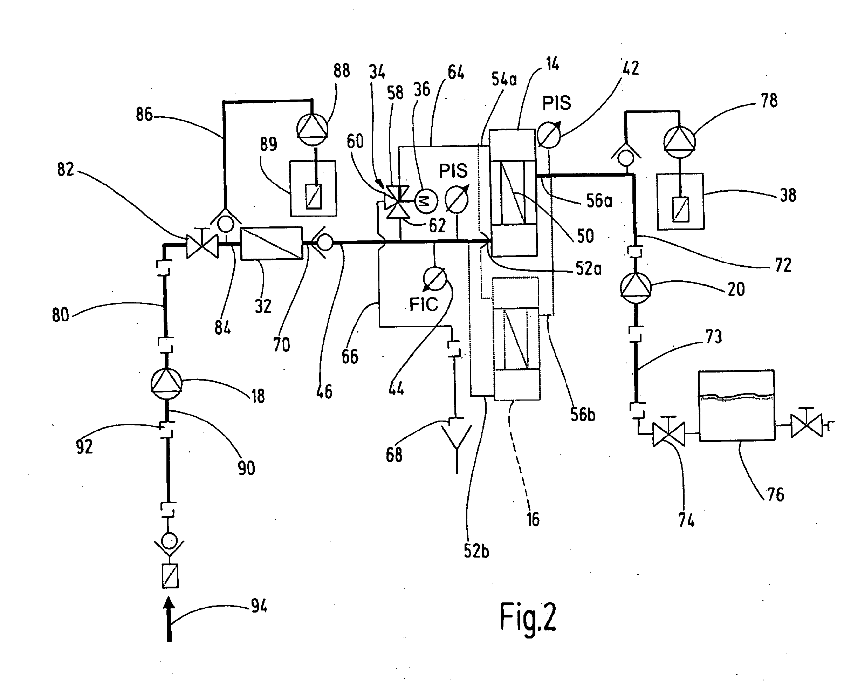

In den Fig. 1 bis 5 ist ein bevorzugtes Ausführungsbeispiel der neuen Wasseraufbereitungsanlage in seiner Gesamtheit mit der Bezugsziffer 10 bezeichnet. Die Anlage 10 besitzt ein Zentralmodul 12, eine erste Filtereinheit 14, eine zweite Filtereinheit 16, eine Filterpumpe 18 und eine Rückspülpumpe 20. Die Filterpumpe 18 und die Rückspülpumpe 20 sind in der Darstellung der Fig. 1 aus Gründen der Übersichtlichkeit nicht gezeigt. Sie sind in den bevorzugten Ausführungsbeispielen getrennt von dem Zentralmodul 12, der ersten Filtereinheit 14 und der zweiten Filtereinheit 16 transportierbar und werden im Betrieb der Anlage nur über Rohrleitungen mit dem Zentralmodul 12 und den Filtereinheiten 14, 16 in der in Fig. 2 ff. dargestellten Weise verbunden.

Das Zentralmodul 12 und die Filtereinheiten 14, 16 besitzen hier jeweils einen eigenen, selbsttragenden Gitterrahmen 22, 24 aus fest miteinander verbundenen Stahlrohren. Jeder Gitterrahmen 22, 24 definiert eine Außenkontur 26, 27. Die Außenkontur 26 umgibt alle wesentlichen funktionsbestimmenden Komponenten des Zentralmoduls 12 und schützt diese beim Transport. Die Außenkontur 27 umgibt die wesentlichen funktionsbestimmenden Komponenten der Filtereinheit 14 und schützt diese beim Transport. Entsprechendes gilt für die zweite Filtereinheit 16. Die Gitterrahmen 22, 24 sind hier weitgehend offen und bieten jeweils zahlreiche Griffmöglichkeiten und Auflagepunkte für Spanngurte, Spannnetze oder dergleichen. In den bevorzugten Ausführungsbeispielen sind das Zentralmodul 12 und die Filtereinheiten 14, 16 jeweils so dimensioniert, dass das Gewicht pro Modul/Filtereinheit maximal 100 kg beträgt, so dass das Zentralmodul und jede Filtereinheit für sich ggf. von mehreren Personen, beispielsweise von vier Personen, getragen werden können.

Wie in Fig. 1 dargestellt, werden die Gitterrahmen 24 der Filtereinheiten 14, 16 zum Betrieb der Anlage 10 an dem Gitterrahmen 22 des Zentralmoduls 12 befestigt, um eine mechanische Einheit zu bilden und so einen stabilen Betrieb zu gewährleisten. Zum Transport und zum Verladen können die einzelnen Module/Einheiten voneinander gelöst werden.

In dem in Fig. 1 dargestellten Ausführungsbeispiel besitzen die Gitterrahmen 24 der Filtereinheiten 14, 16 aus diesem Grund mehrere vorstehende Bolzen 28 (Fig. 6) an ihrem jeweiligen oberen und unteren Ende. Die Bolzen 28 können in entsprechende Öffnungen am Gitterrahmen 24 des Zentralmoduls 12 eingehängt werden. Vorteilhafterweise zeigen die Bolzen am oberen Ende der Filtereinheiten 14, 16 in der in Fig. 1 dargestellten Betriebsposition nach unten, so dass die Gitterrahmen 24 von oben in entsprechende Öffnungen am Gitterrahmen 22 eingehängt werden können.

An ihrem jeweiligen unteren Ende besitzen die Gitterrahmen 24 zwei horizontal ausgerichtete Bolzenpaare, die in entsprechende horizontale Öffnungen am Gitterrahmen 22 des Zentralmoduls 12 eingeführt werden können. In dem bevorzugten Ausführungsbeispiel können die Filtereinheiten 14, 16 daher zunächst schräg von oben in den Gitterrahmen 22 des Zentralmoduls 12 eingehängt werden. Anschließend können die horizontalen Bolzen 28 am unteren freien Ende der Filtereinheiten 14, 16 durch eine Schwenkbewegung in die entsprechenden Öffnungen am Gitterrahmen 22 eingeführt werden. In den bevorzugten Ausführungsbeispielen werden die Bolzen 28 am unteren Ende der Filtereinheiten 14, 16 anschließend noch mit Hilfe von Gummispannern gegen ein unbeabsichtigtes Lösen gesichert. Anstelle von Bolzen 28 könnten die Gitterrahmen 24 auch mit Hacken und Ösen, mit Konuszapfen, mit Nut- und Federverbindungen, mit Schrauben und Muttern oder mit anderen lösbaren mechanischen Koppelelementen zu einer Einheit verbunden werden.

In dem dargestellten Ausführungsbeispiel beinhaltet das Zentralmodul 12 eine Steuereinheit 30, die dazu ausgebildet ist, den Filtrationsbetrieb und verschiedene Reinigungsmodi zu steuern. Des Weiteren beinhaltet das Zentralmodul 12 hier einen Vorfilter 32, einen verstellbaren Dreiwege-Kugelhahn 34, einen elektrischen Motor 36 zum Verstellen des Kugelhahns 34, einen oder mehrere Behälter 38 zur Aufnahme eines Desinfektionsmittels, wie zum Beispiel Chlor, und/oder zur Aufnahme eines Flockungsmittels, zwei Drucksensoren 40, 42, einen Volumenstromsensor 44 sowie zumindest eine fest verlegte Rohwasserleitung 46, die in der nachfolgend erläuterten Weise zum Anschluss der Filtereinheiten 14, 16 an den Kugelhahn 34 dient. Anstelle eines Kugelhahns können auch andere Stellglieder verwendet sein, etwa Magnetventile.

Wie man in Fig. 1 erkennen kann, besitzt jede Filtereinheit 14, 16 hier ein zylinderförmiges Gehäuse, in dem jeweils ein Filterelement 50 angeordnet ist. In einigen bevorzugten Ausführungsbeispielen ist das Filterelement 50 eine zylinderförmige Membran, die weitgehend konzentrisch in dem Filtergehäuse angeordnet ist und die eine Porengröße aufweist, die gleich oder kleiner als 0,01 µm ist. Somit ermöglicht jedes Filterelement 50 eine sogenannte Ultrafiltration. Des Weiteren besitzt jede Filtereinheit 14, 16 einen ersten und einen zweiten Rohwasseranschluss 52a, 52b, 54a, 54b, die jeweils auf der Rohwasserseite der Filtermembran 50 liegen, sowie einen Filtratanschluss 56a, 56b, an dem Filtrat aus der Filtereinheit 14, 16 austreten kann. In den bevorzugten Ausführungsbeispielen sind die Anschlüsse der Filtereinheiten 14, 16 als bajonettartige Schlauchkupplungen ausgebildet, insbesondere als so genannte Storz-Kupplungen, die in Europa vielfach als Kupplungen für Feuerwehrschläuche Verwendung finden. Derartige Kupplungen ermöglichen eine einfache Montage und Demontage der Rohrleitungen für die Inbetriebnahme bzw. den Abbau der neuen Aufbereitungsanlage 10.

Der Dreiwege-Kugelhahn 34 besitzt einen ersten Ventilanschluss 58, einen zweiten Ventilanschluss 60 und einen dritten Ventilanschluss 62. Der erste Ventilanschluss 58 ist über eine Rohwasserleitung 64 mit dem Rohwasseranschluss 54a am oberen Ende der Filtereinheit 14 verbunden. Die Rohwasserleitung 64 kann aufgrund der bevorzugten Kupplungen einfach gelöst und entfernt werden, um die Filtereinheit 14 zum Transport von dem Zentralmodul 12 zu lösen. Dementsprechend sei der guten Ordnung halber darauf hingewiesen, dass in den Funktionsblockschaltbildern der Fig. 2 bis 5 jeweils eine Betriebssituation dargestellt ist, in der die Leitungsverbindungen für den Betrieb der Anlage montiert sind, während die Darstellung in Fig. 1 die Anlage ohne die für den Transport demontierbaren Leitungen zeigt.

Der zweite Ventilanschluss 60 des Kugelhahns 34 bildet zusammen mit einer weiteren Rohwasserleitung 66 einen Rohwasserauslass 68. Der dritte Ventilanschluss 62 des Kugelhahns 34 ist über einen T-Abzweig mit der Rohwasserleitung 46 verbunden, die einerseits zum Rohwasseranschluss 52a der Filtereinheit 14 und andererseits zu einem Vorfilterausgang 70 des Vorfilters 32 führt. Wie bereits weiter oben erwähnt, ist die Rohwasserleitung 46 in den bevorzugten Ausführungsbeispielen fest in dem Zentralmodul 12 installiert, so dass sie auch für den Transport der Anlage 10 nicht gelöst werden muss. Gleiches gilt für den T-Abzweig. In den bevorzugten Ausführungsbeispielen ist am Vorfilterausgang 70 des Vorfilters 32 außerdem ein Rückschlagventil angeordnet, so dass Rohwasser nicht durch den Vorfilterausgang 70 in den Vorfilter 32 zurücklaufen kann.

Der Filtratanschluss 56a der Filtereinheit 14 ist über eine Wasserleitung 72 mit dem Ausgang der Rückspülpumpe 20 verbunden. Der Eingang der Rückspülpumpe 20 ist über eine weitere Wasserleitung 73 und - vorzugsweise - über einen Absperrhahn 74 zu einem Wassertank 76 geführt. Der Ausgang der Wasserleitung 73 bildet hier einen Trinkwasserauslass, der über den Absperrhahn 74 geöffnet und geschlossen werden kann. Der Wassertank 76 dient zur Aufnahme und Speicherung von Filtrat, das in den bevorzugten Ausführungsbeispielen ohne zusätzliche Umkehrosmose als Trinkwasser verwendet werden kann.

Wie man in Fig. 2 erkennen kann, ist in den bevorzugten Ausführungsbeispielen ferner ein Behälter 38 mit Desinfektionsmittel, insbesondere Chlor, über eine Desinfektionsmittelpumpe 78 und ein weiteres Rückschlagventil an die Wasserleitung 72 angeschlossen. Mit Hilfe der Desinfektionsmittelpumpe 78 kann ein Desinfektionsmittel, insbesondere Chlor, dem Filtrat am Ausgang der Filtereinheit 14 hinzugefügt werden. In den bevorzugten Ausführungsbeispielen ist die Desinfektionsmittelpumpe 78 fest in dem Zentralmodul 12 installiert.

Wie man in den Fig. 2 ff. ferner erkennen kann, sind die Filtereinheiten 14, 16 hier parallel geschaltet, das heißt die jeweils entsprechenden Rohwasseranschlüsse 52a, 52b, 54a, 54b und Filtratanschlüsse 56a, 56b sind über T-Abzweige gemeinsam an die Wasserleitungen 46, 64 und 72 angeschlossen. Es ist jedoch auch möglich, die neue Anlage 10 mit nur einer Filtereinheit 14 (oder alternativ der Filtereinheit 16) zu betreiben.

Die Filterpumpe 18 ist über eine weitere Rohwasserleitung 80 und einen Absperrhahn 82 mit einem Vorfiltereingang 84 des Vorfilters 32 verbunden. Außerdem mündet in den bevorzugten Ausführungsbeispielen eine weitere Leitung 86 über ein Rückschlagventil am Vorfiltereingang 84. Die Leitung 86 ist über eine weitere Pumpe 88 mit einem weiteren Behälter 89 verbunden, in dem ein Flockungsmittel enthalten ist, das dem Rohwasser zur Flockung (Klumpenbildung) von Schmutzteilchen zugeführt werden kann. Eingangseitig ist die Filterpumpe 18 über eine weitere Leitung 90 zu einem Rohwassereinlass 92 geführt, an dem Rohwasser in Richtung des Pfeils 94 angesaugt werden kann.

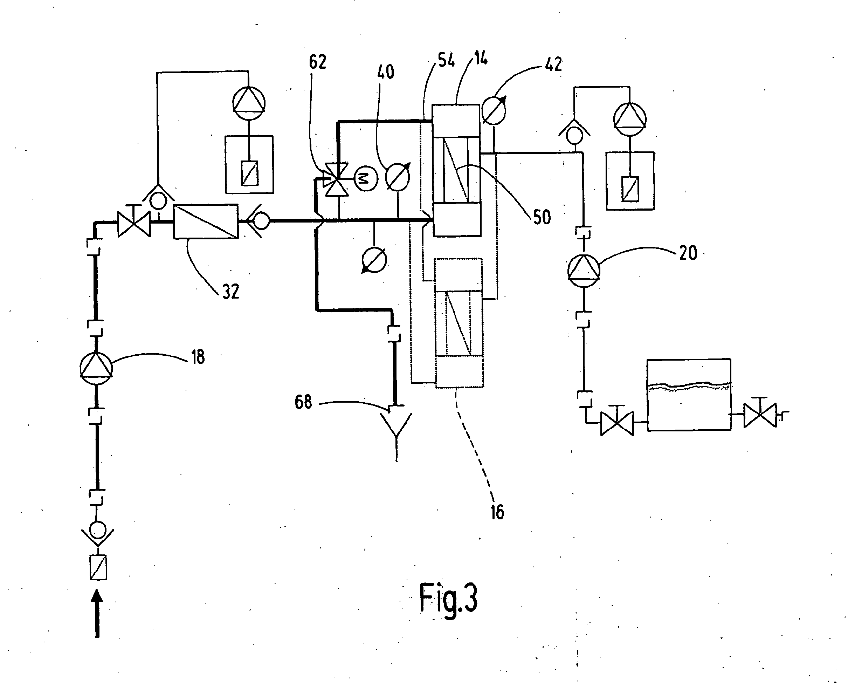

Im Filtrationsbetrieb saugt die Filterpumpe 18 Rohwasser in Richtung des Pfeils 94 an und presst dieses mit Überdruck durch den Vorfilter 32 und den Rohwasseranschluss 52 in die Filtereinheiten 14, 16. Das angesaugte Rohwasser wird aufgrund des Überdrucks auf der Druckseite der Filterpumpe 18 durch die Filtermembran 50 gepresst und gelangt als Filtrat in den Wassertank 76. Im Filtrationsbetrieb überwacht die Steuereinheit 30 den Volumenstrom in der Rohwasserleitung 46 und die Drücke vor und hinter dem Filterelement 50 mit Hilfe der Sensoren 40, 42, 44. Sobald über dem Filterelement 50 ein Differenzdruck von mehr als 0,7 bar festgestellt wird, und/oder in vordefinierten Zeitintervallen, unterbricht die Steuereinheit 30 den Filtrationsbetrieb aus Fig. 2 und startet einen automatischen Spülvorgang der Filterelemente 50 in einem Vorwärts-Spülbetrieb. Dieser Vorwärts-Spülbetrieb ist in Fig. 3 dargestellt. Gleiche Bezugszeichen bezeichnen dieselben Elemente wie zuvor.

Die Steuereinheit 30 steuert die Filterpumpe im Vorwärts-Spülbetrieb mit maximaler Drehzahl an, nachdem sie den Kugelhahn 34 so verstellt hat, dass der Rohwasseranschluss 54 über den zweiten Ventilanschluss 62 mit dem Rohwasserauslass 68 verbunden ist. Das von der Filterpumpe 18 angesaugte Rohwasser strömt somit von dem ersten Rohwasseranschluss 52 an der Rohwasserseite des Filterelements 50 entlang zum zweiten Rohwasseranschluss 54 und von dort zum Rohwasserauslass 68. Mit anderen Worten wird die Filtermembran 50 auf der Rohwasserseite mit Rohwasser überspült, so dass ein Filterkuchen, der sich auf der Filtermembran 50 abgelagert hat, abgetragen wird.

Aufgrund der geringen Porengröße der Filtermembran 50 und aufgrund des hohen Drucks, mit dem die Filterpumpe 18 das Rohwasser durch die Filtermembran 50 hindurchpresst, können sich im Filtrationsbetrieb jedoch hartnäckige Ablagerungen auf der Filtermembran 50 bilden, die durch dem Vorwärts-Spülbetrieb gemäß Fig. 3 nicht vollständig entfernt werden können.

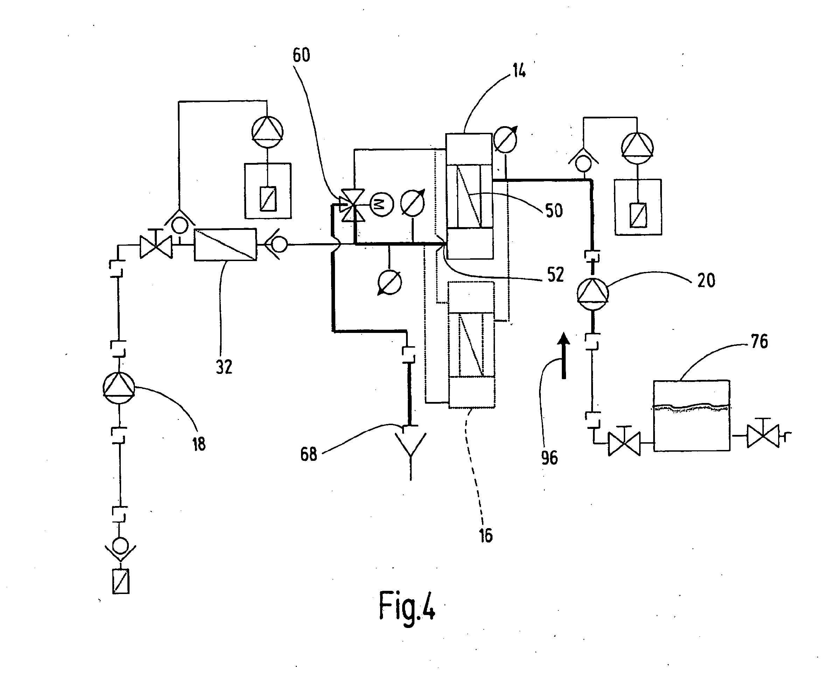

Daher führt die Steuereinheit 30 in den bevorzugten Ausführungsbeispielen nach einer definierten Anzahl von Spülvorgängen in Vorwärtsrichtung und/oder nach Ablauf von vordefinierten Zeitintervallen einen zusätzlichen Spülvorgang in Rückwärtsrichtung durch. Dieser Spülbetrieb in Rückwärtsrichtung ist in Fig. 4 dargestellt. Gleiche Bezugszeichen bezeichnen dieselben Elemente wie zuvor.

Die Steuereinheit 30 steuert den Kugelhahn 34 so an, dass der erste Rohwasseranschluss 52 über den Ventilanschluss 60 mit dem Rohwasserauslass 68 verbunden ist. Des Weiteren steuert die Steuereinheit 30 die Rückspülpumpe 20 an, um Filtrat aus dem Wassertank 76 in Richtung des Pfeils 96 durch die Filtermembran 50 zu drücken. In einigen Ausführungsbeispielen führt die Steuereinheit 30 jeweils einen Rückspülvorgang durch, nachdem sie drei Spülvorgänge in Vorwärtsrichtung durchgeführt hat. Jeder Spülvorgang wird gestartet, wenn der Differenzdruck über dem Filterelement 50 eine vordefinierte Schwelle von beispielsweise 0,7 bar übersteigt. Es ist ebenfalls möglich, Vorwärts- und Rückwärtsspülvorgänge abwechselnd und/oder bei unterschiedlichen Differenzdrücken zu starten.

In den bevorzugten Ausführungsbeispielen ist die Steuereinheit 30 in der Lage, die Spülvorgänge gemäß Fig. 3 und Fig. 4 automatisch und ohne manuellen Eingriff in den automatischen Filtrationsbetrieb zu integrieren. Aufgrund der geringen Porengröße der Filterelemente ist es jedoch möglich, dass die Spülvorgänge gemäß Fig. 3 und Fig. 4 auch in Kombination miteinander nicht ausreichen, um die Filtermembranen dauerhaft belagfrei zu halten. Daher besitzt die Anlage 10 in den bevorzugten Ausführungsbeispielen einen zusätzlichen Reinigungsbetrieb, in dem die Filtermembran mit einer chemischen Reinigungsflüssigkeit in einem Zirkulationsbetrieb auf der Rohwasserseite gespült wird. In den bevorzugten Ausführungsbeispielen weist die Steuereinheit 30 den Bediener der Anlage 10 über ein integriertes Display (hier nicht dargestellt) an, dass der spezielle Reinigungsbetrieb notwendig ist und dass zu diesem Zweck der Filtrationsbetrieb unterbrochen werden muss, um den Rohwassereinlass 92 und den Rohwasserauslass 68 über eine Rohwasserleitung 98 kurzzuschließen. Außerdem wird der Bediener angewiesen, ein Reinigungsmittel (hier nicht dargestellt) in den Filterbeutel des Vorfilters 32 einzufüllen. Beispielsweise kann das Reinigungsmittel in Form von gepressten Tabletten in den Vorfilter 32 eingefüllt werden, wobei sich die Tabletten in dem zur Reinigung zirkulierenden Rohwasser auflösen. Die Steuereinheit 30 steuert den Kugelhahn 34 ferner so an, dass der Rohwasseranschluss 54 am oberen Ende der Filtereinheit 14/16 mit dem kurzgeschlossenen Rohwasserauslass 68 verbunden ist. Auf diese Weise wird ein Zirkulationspfad für die Reinigungsflüssigkeit gebildet, in dem die Filterpumpe 18 die Reinigungsflüssigkeit mit Unterdruck aus dem Vorfilter 32 ansaugt und somit an der Filtermembran 50 vorbeiführt. Es ist von Vorteil, wenn für diesen speziellen Reinigungsbetrieb der Absperrhahn 74 geschlossen wird.

In den bevorzugten Ausführungsbeispielen wird die Filterpumpe 18 somit in zwei verschiedenen Funktionen verwendet, nämlich einerseits als Druckpumpe, die zu filterndes Rohwasser ansaugt und mit Überdruck zu dem Filterelement 50 befördert, und andererseits als Saugpumpe, die ein Reinigungsmittel aus dem Vorfilter 32 ansaugt und dabei an der Filtermembran 50 entlangströmen lässt.

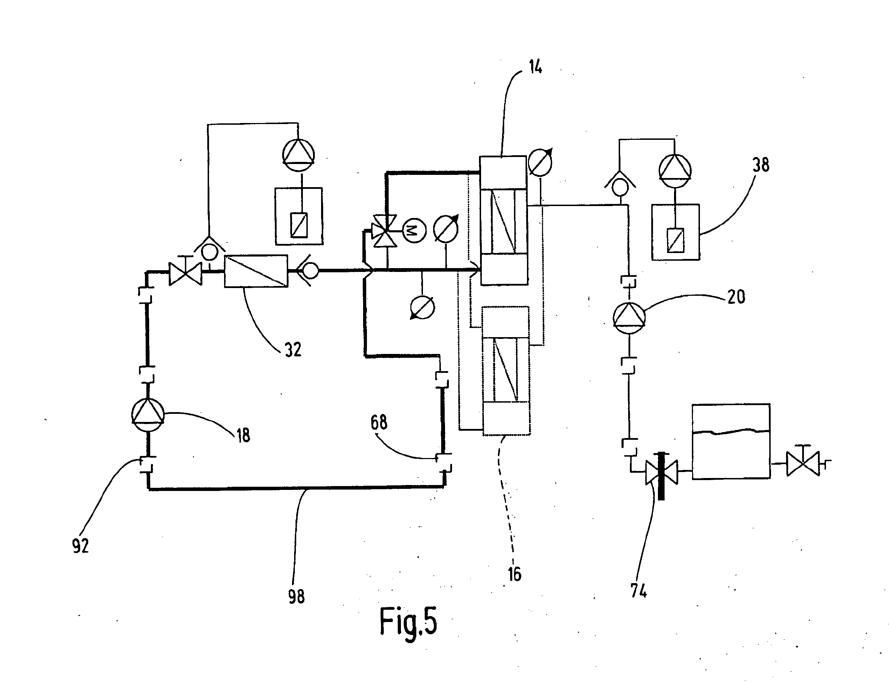

In den bevorzugten Ausführungsbeispielen folgen nach dem Reinigungsvorgang gemäß Fig. 5 separate Spül- und Desinfektionsvorgänge, nachdem die Steuereinheit 30 den Benutzer der Anlage 10 über das Display angewiesen hat, den Kurzschluss 98 zwischen dem Rohwassereinlass 92 und dem Rohwasserauslass 68 wieder zu öffnen. Die Spül- und Desinfektionsvorgänge können analog zu den Spülvorgängen in Vorwärtsrichtung (Fig. 3) und Rückwärtsrichtung (Fig. 4) durchgeführt werden, wobei Desinfektionsmittel aus dem Behälter 38 in den Rückspülstrom zugeführt wird. Es ist auch möglich, das Desinfektionsmittel in einem Tank anstelle des Wassertanks 76 anzusetzen und mit Hilfe der Rückspülpumpe 20 aus dem Tank anzusaugen.

In den bevorzugten Ausführungsbeispielen muss der Bediener lediglich den Anweisungen der Steuereinheit auf dem Display folgen und insbesondere die Kurzschlussleitung 98 für den besonderen Reinigungsbetrieb zwischen dem Rohwassereinlass 92 und dem Rohwasserauslass 68 montieren bzw. demontieren. Alle weiteren Spül- und Reinigungsvorgänge erfolgen automatisch gemäß einem in der Steuereinheit 30 hinterlegten Steuerprogramm. Die Reinigung der Anlage 10 lässt sich also mit wenigen Handgriffen und insbesondere ohne eine zusätzliche Reinigungspumpe erledigen.

Wie bereits weiter oben erwähnt wurde, passt die Steuereinheit 30 den Filtratvolumenstrom im Filtrationsbetrieb automatisch an die Qualität des vorhandenen Rohwassers an, wobei die Steuereinheit 30 in den bevorzugten Ausführungsbeispielen lediglich die Informationen der beiden Drucksensoren 40 und des Volumenstromsensors 64 auswertet. Dementsprechend verzichtet die Anlage 10 in den bevorzugten Ausführungsbeispielen auf eine aufwändige Analyse- und Sensortechnik, was dem geringen Gewicht und dem robusten Betrieb zugute kommt. Diese Spül- und Reinigungsvorgänge werden jeweils in definierten Zeitintervallen durchgeführt, deren Länge und Häufigkeit als Parameter in der Steuereinheit 30 gespeichert sind und die die Steuereinheit mit Hilfe einer integrierten Uhr 100 bestimmt. In einigen Ausführungsbeispielen dauert jeder Spülvorgang in Vorwärtsrichtung ca. 30 Sekunden, während ein Spülvorgang in Rückwärtsrichtung ca. 50 Sekunden dauert.

## Patentansprüche

1. Mobile Wasseraufbereitungsanlage zum Erzeugen von Trinkwasser in einem Katastrophengebiet, mit einem Rohwassereinlass (92) zum Zuführen von Rohwasser, mit einer ersten Filtereinheit (14), die ein Filterelement (50) zum Filtern des Rohwassers, einen ersten und einen separaten zweiten Rohwasseranschluss (52, 54) auf einer Rohwasserseite des Filterelements (50) und einen ersten Filtratanschluss (56) auf einer Filtratseite des Filterelements (50) aufweist, mit einer Filterpumpe (18), die zwischen dem Rohwassereinlass (92) und dem Filterelement (50) angeordnet ist, mit einem Trinkwasserauslass (73), der mit dem Filtratanschluss (56) verbunden ist, mit einer Steuereinheit (30), die die Filterpumpe (18) in einem Filtrationsbetrieb ansteuert, um das Rohwasser durch das Filterelement (50) zu pressen, mit einem verstellbaren Dreiwegestellglied (34), das einen ersten, einen zweiten und einen dritten Ventilanschluss (58, 60, 62) aufweist, und mit einem separaten Rohwasserauslass (68), wobei der erste Ventilanschluss (58) mit dem ersten Rohwasseranschluss (54) der Filtereinheit (14) verbunden ist, wobei der zweite Ventilanschluss (60) mit dem Rohwasserauslass (68) verbunden ist, und wobei der dritte Ventilanschluss (62) mit einer ersten Rohwasserleitung (46) verbunden ist, die von der Filterpumpe (18) zu dem zweiten Rohwasseranschluss (52) der Filtereinheit (14) führt.

2. Mobile Wasseraufbereitungsanlage nach Anspruch 1, wobei die Steuereinheit (30) außerdem das Dreiwegestellglied (34) ansteuert, um von dem Filtrationsbetrieb zu einem Filterreinigungsbetrieb umzuschalten.

3. Mobile Wasseraufbereitungsanlage nach Anspruch 1 oder 2, ferner mit einem Vorfilter (32) mit einem Vorfiltereingang (84) und einem Vorfilterausgang (70), wobei der Vorfiltereingang (84) mit einer zweiten Rohwasserleitung (80) verbunden ist, die zu der Filterpumpe (18) führt, und wobei der Vorfilterausgang (70) mit der ersten Rohwasserleitung (46) verbunden ist.

4. Mobile Wasseraufbereitungsanlage nach Anspruch 3, wobei der Vorfilter (32) eine Öffnung zum Einfüllen eines Reinigungsmittels aufweist.

5. Mobile Wasseraufbereitungsanlage nach einem der Ansprüche 1 bis 4, ferner mit einer dritten Rohwasserleitung (98), die dazu ausgebildet ist, den Rohwassereinlass (92) und den Rohwasserauslass (68) kurzzuschließen.

6. Mobile Wasseraufbereitungsanlage nach einem der Ansprüche 1 bis 5, ferner mit einer Rückspülpumpe (20), die zwischen dem Filtratanschluss (56) der Filtereinheit (14) und dem Trinkwasserauslass (73) angeordnet ist.

7. Mobile Wasseraufbereitungsanlage nach einem der Ansprüche 1 bis 6, ferner mit einem Absperrglied (74), das den Filtratanschluss (56) wahlweise verschließt.

8. Mobile Wasseraufbereitungsanlage nach einem der Ansprüche 1 bis 7, ferner mit einem Volumenstromsensor (44), der einen Volumenstrom durch das Filterelement (14) liefert, einem ersten und einem zweiten Drucksensor (40, 42), die einen Differenzdruck über dem Filterelement (50) liefern, und einem Zeitmesser (100), wobei die Steuereinheit (30) dazu ausgebildet ist, die Filterpumpe (18) im Filtrationsbetrieb allein in Abhängigkeit von dem Volumenstrom, dem Differenzdruck und definierten Zeitintervallen zu steuern.

9. Mobile Wasseraufbereitungsanlage nach einem der Ansprüche 1 bis 8, ferner mit einem selbsttragenden Gitterrahmen (22), der eine Außenkontur (26) definiert, die zumindest die Steuereinheit (30) und das Dreiwegestellglied (34) umgibt.

10. Mobile Wasseraufbereitungsanlage nach einem der Ansprüche 1 bis 9, wobei die erste Filtereinheit (14) einen weiteren selbsttragenden Gitterrahmen (24) aufweist, der Außenkontur (27) definiert.

11. Mobile Wasseraufbereitungsanlage nach einem der Ansprüche 1 bis 10, ferner mit einer zweiten Filtereinheit (16) mit einem dritten und einem vierten Rohwasseranschluss (52b, 54b) und einem zweiten Filtratanschluss (56b), wobei der erste und der dritte Rohwasseranschluss(54a, 54b) parallel geschaltet sind, wobei der zweite und der vierte Rohwasseranschluss (52a, 52b) parallel geschaltet sind, und wobei der erste und der zweite Filtratanschluss (56a, 56b) parallel geschaltet sind.

12. Mobile Wasseraufbereitungsanlage nach einem der Ansprüche 1 bis 11, wobei das Filterelement (50) eine Porengröße kleiner als 0,1 µm, vorzugsweise kleiner als 0,01 µm aufweist.

13. Verfahren zum Erzeugen von Trinkwasser in einem Katastrophengebiet, mit den Schritten:
- Bereitstellen einer mobilen Wasseraufbereitungsanlage (10) mit einem Rohwassereinlass (92) zum Zuführen von Rohwasser, mit einer ersten Filtereinheit (14), die ein Filterelement (50) zum Filtern des Rohwassers, einen ersten und einen separaten zweiten Rohwasseranschluss (52, 54) auf einer Rohwasserseite des Filterelements (50) und einen ersten Filtratanschluss (56) auf einer Filtratseite des Filterelements (14) aufweist, mit einer Filterpumpe (18), die zwischen dem Rohwassereinlass (92) und dem Filterelement (14) angeordnet ist, mit einem Trinkwasserauslass (73), der mit dem Filtratanschluss (56) verbunden ist, mit einer Steuereinheit (30), die die Filterpumpe (18) in einem Filtrationsbetrieb ansteuert, um das Rohwasser durch das Filterelement (50) zu pressen, mit einem verstellbaren Dreiwegestellglied (34), das einen ersten, einen zweiten und einen dritten Ventilanschluss (58, 60, 62) aufweist, und mit einem separaten Rohwasserauslass (68), wobei der erste Ventilanschluss (58) mit dem ersten Rohwasseranschluss (54) der Filtereinheit (14) verbunden ist, wobei der zweite Ventilanschluss (60) mit dem Rohwasserauslass (68) verbunden ist, und wobei der dritte Ventilanschluss (62) mit einer ersten Rohwasserleitung (46) verbunden ist, die von der Filterpumpe (18) zu dem zweiten Rohwasseranschluss (52) der Filtereinheit (14) führt,
- Filtern des Rohwassers mit der mobilen Wasseraufbereitungsanlage (10) in dem Filtrationsbetrieb bis zu einem definierten Betriebszustand, der eine spezielle Reinigung des Filterelements (50) erfordert,
- Kurzschließen des Rohwassereinlasses (92) und des Rohwasserauslasses (68) mit einer dritten Rohwasserleitung (98), um einen Zirkulationspfad von dem Rohwassereinlass (92) über die Filterpumpe (18), den zweiten und den ersten Rohwasseranschluss (52, 54) und das Dreiwegestellglied (34) zum Rohwasserauslass (68) zu schaffen, und
- Betreiben der Filterpumpe (18), um das Filterelement (50) mit ungefiltertem Rohwasser im Zirkulationsbetrieb zu reinigen.

## Claims

1. A mobile water treatment plant for producing potable water in a disaster area, comprising a raw water inlet (92) for supplying raw water, comprising a first filter unit (14) which comprises a filter element (50) for filtering the raw water, a first and a separate second raw water connection (52, 54) at a raw water side of the filter element (50) and a first filtered matter connection (56) on a filtered matter side of the filter element (50), comprising a filter pump (18) arranged between the raw water inlet (92) and the filter element (50), comprising a potable water outlet (73) connected to the filtered matter connection (56), comprising a control unit (30) controlling the filter pump (18) during a filter operation in order to press the raw water through the filter element (50), comprising an adjustable three-way cock (34) having a first, a second and a third valve connection (58, 60, 62), and comprising a separate raw water outlet (68), wherein the first valve connection (58) is connected to the first raw water outlet (54) of the filter unit (14), wherein the second valve outlet (60) is connected to the raw water outlet (68), and wherein the third valve connection is connected to a first raw water pipe, which leads from the filter pump (18) to the second raw water connection (52) of the filter unit (14).

2. The mobile water treatment plant according to claim 1, wherein the control unit (30) further controls the three-way cock (34) in order to switch from the filter operation to a filter cleaning operation.

3. The mobile water treatment plant according to claim 1 or 2, further comprising a prefilter (32) having a prefilter input (84) and a prefilter output (70), wherein the prefilter input (84) is connected to a second raw water pipe (80) leading to the filter pump (18), and wherein the prefilter output (70) is connected to the first raw water pipe (46).

4. The mobile water treatment plant according to claim 3, wherein the prefilter (32) comprises an opening for filling in a cleaning agent.

5. The mobile water treatment plant according to one of claims 1 to 4, further comprising a third raw water pipe (98) which is configured to connect the raw water inlet (92) and the raw water outlet (68).

6. The mobile water treatment plant according to one of claims 1 to 5, further comprising a back-flushing pump (20) arranged between the filtered matter connection (56) of the filter unit (14) and the potable water outlet (73).

7. The mobile water treatment plant according to one of claims 1 to 6, further comprising a stop cock (74) which selectively closes the filtered matter connection (56).

8. The mobile water treatment plant according to one of claims 1 to 7, further comprising a volume flow sensor (44) providing a volume flow through the filter element (14), comprising a first and a second pressure sensor (40, 42) providing a differential pressure across the filter element (50), and comprising a timing device (100), wherein the control unit (30) is configured to control the filter pump (18) merely in response to the volume flow, the differential pressure and defined time intervals during the filter operation.

9. The mobile water treatment plant according to one of claims 1 to 8, further comprising a self supporting frame structure (22) which defines an outer contour (26), said outer contour surrounding at least the control unit (30) and the three-way cock (34).

10. The mobile water treatment plant according to one of claims 1 to 9, wherein the first filter unit (14) comprises a further self supporting frame structure (24), which defines an outer contour (27).

11. The mobile water treatment plant according to one of claims 1 to 10, further comprising a second filter unit (16) having a third and a fourth raw water connection (52b, 54b) and a second filtered matter connection (56b), wherein the first and the third raw water connection (54a, 54b) are arranged in parallel, wherein the second and the fourth raw water connection (52a, 52b) are arranged in parallel, and wherein the first and the second filtered matter connection (56a, 56b) are arranged in parallel.

12. The mobile water treatment plant according to one of claims 1 to 11, wherein the filter element (50) has a pore size smaller than 0,1µm, preferably smaller than 0,01µm.

13. A method for producing potable water in a disaster area, comprising the steps of
- providing a mobile water treatment plant (10) comprising a raw water inlet (92) for supplying raw water, comprising a first filter unit (14) which comprises a filter element (50) for filtering the raw water, a first and a separate second raw water inlet (52, 54) on a raw water side of the filter element (50) and a first filtered matter connection (56) on a filtered matter side of the filter element (14), comprising a filter pump (18) arranged between the raw water inlet (92) and the filter element (14), comprising a potable water outlet (73) connected to the filtered matter connection (56), comprising a control unit (30) controlling the filter pump (18) during a filter operation in order to press the raw water through the filter element (50), comprising an adjustable three-way cock (34) having a first, a second and a third valve connection (58, 60, 62), and comprising a separate raw water outlet (68), wherein the first valve connection (58) is connected to the first raw water connection (54) of the filter unit (14), wherein the second valve connection (60) is connected to the raw water outlet (68), and wherein the third valve connection (62) is connected to a first raw water pipe (46) which leads from the filter pump (18) to the second raw water connection (52) of the filter unit (14),
- filtering the raw water using the mobile water treatment plant (10) in the filter operation up to a defined operational state which requires special cleaning of the filter element (50),
- cross connecting the raw water inlet (92) and the raw water outlet (68) by a third raw water pipe (98) in order to produce a circulation path from the raw water inlet (92) via the filter pump (18), the second and the first raw water connection (52, 54) and the three-way cock (34) to the raw water outlet (68), and
- operating the filter pump (18) in order to clean the filter element (14) with unfiltered raw water in a circulation operation.

## Revendications

1. Installation mobile de traitement de l'eau pour produire de l'eau potable dans une zone sinistrée, avec une entrée d'eau brute (92) pour acheminer l'eau brute, avec une première unité de filtre (14) qui présente un élément de filtre (50) pour filtrer l'eau brute, un premier raccord d'eau brute et un deuxième raccord d'eau brute séparé (52, 54) sur un côté eau brute de l'élément de filtre (50) et un premier raccord de filtrat (56) sur un côté filtrat de l'élément de filtre (50), avec une pompe de filtration (18), qui est disposée entre l'entrée d'eau brute (92) et l'élément de filtre (50), avec une sortie d'eau potable (73) qui est connectée au raccord de filtrat (56), avec une unité de commande (30) qui commande la pompe de filtration (18) dans un fonctionnement de filtration, afin de presser l'eau brute à travers l'élément de filtre (50), avec un organe de commande réglable à trois voies (34), qui présente un premier, un deuxième, et un troisième raccord de soupape (58, 60, 62), et avec une sortie d'eau brute séparée (68), le premier raccord de soupape (58) étant connecté au premier raccord d'eau brute (54) de l'unité de filtre (14), le deuxième raccord de soupape (60) étant connecté à la sortie d'eau brute (68), et le troisième raccord de soupape (62) étant connecté à une première conduite d'eau brute (46) qui conduit de la pompe de filtration (18) au deuxième raccord d'eau brute (52) de l'unité de filtre (14).

2. Installation mobile de traitement de l'eau selon la revendication 1, dans laquelle l'unité de commande (30) commande en outre l'organe de commande à trois voies (34) afin de commuter entre un fonctionnement de filtration et un fonctionnement de nettoyage du filtre.

3. Installation mobile de traitement de l'eau selon la revendication 1 ou 2, comprenant en outre un préfiltre (32) avec une entrée de préfiltre (84) et une sortie de préfiltre (70), l'entrée de préfiltre (84) étant connectée à une deuxième conduite d'eau brute (80) qui conduit à la pompe de filtration (18), et la sortie de préfiltre (70) étant connectée à la première conduite d'eau brute (46).

4. Installation mobile de traitement de l'eau selon la revendication 3, dans laquelle le préfiltre (32) présente une ouverture pour l'introduction d'un agent de nettoyage.

5. Installation mobile de traitement de l'eau selon l'une quelconque des revendications 1 à 4, comprenant en outre une troisième conduite d'eau brute (98), qui est réalisée de manière à court-circuiter l'entrée d'eau brute (92) et la sortie d'eau brute (68).

6. Installation mobile de traitement de l'eau selon l'une quelconque des revendications 1 à 5, comprenant en outre une pompe de rinçage à contre-courant (20) qui est disposée entre le raccord de filtrat (56) de l'unité de filtre (14) et la sortie d'eau potable (73).

7. Installation mobile de traitement de l'eau selon l'une quelconque des revendications 1 à 6, comprenant en outre un organe d'arrêt (74) qui ferme de manière sélective le raccord de filtrat (56).

8. Installation mobile de traitement de l'eau selon l'une quelconque des revendications 1 à 7, comprenant en outre un capteur de débit volumique (44) qui fournit un débit volumique à travers l'élément de filtre (14), un premier et un deuxième capteur de pression (40, 42), qui fournissent une pression différentielle par le biais de l'élément de filtre (50), et une temporisation (100), l'unité de commande (30) étant réalisée de manière à commander la pompe de filtration (18) en mode de filtration seulement en fonction du débit volumique, de la pression différentielle et d'intervalles de temps définis.

9. Installation mobile de traitement de l'eau selon l'une quelconque des revendications 1 à 8, comprenant en outre un cadre grillagé autoporteur (22), qui définit un contour extérieur (26) qui entoure au moins l'unité de commande (30) et l'organe de commande à trois voies (34).

10. Installation mobile de traitement de l'eau selon l'une quelconque des revendications 1 à 9, dans laquelle la première unité de filtre (14) présente un cadre grillagé autoporteur supplémentaire (24) qui définit le contour extérieur (27).

11. Installation mobile de traitement de l'eau selon l'une quelconque des revendications 1 à 10, comprenant en outre une deuxième unité de filtre (16) avec un troisième et un quatrième raccord d'eau brute (52b, 54b) et un deuxième raccord de filtrat (56b), le premier et le troisième raccord d'eau brute (54a, 54b) étant montés en parallèle, le deuxième et le quatrième raccord d'eau brute (52a, 52b) étant montés en parallèle et le premier et le deuxième raccord de filtrat (56a, 56b) étant montés en parallèle.

12. Installation mobile de traitement de l'eau selon l'une quelconque des revendications 1 à 11, dans laquelle l'élément de filtre (50) présente une taille de pores inférieure à 0,1 µm, de préférence inférieure à 0,01 µm.

13. Procédé pour produire de l'eau potable dans une zone sinistrée, comprenant les étapes suivantes :
- fourniture d'une installation mobile de traitement de l'eau (10) avec une entrée d'eau brute (92) pour acheminer l'eau brute, avec une première unité de filtre (14) qui présente un élément de filtre (50) pour filtrer l'eau brute, un premier raccord d'eau brute et un deuxième raccord d'eau brute séparé (52, 54) sur un côté eau brute de l'élément de filtre (50) et un premier raccord de filtrat (56) sur un côté filtrat de l'élément de filtre (50), avec une pompe de filtration (18), qui est disposée entre l'entrée d'eau brute (92) et l'élément de filtre (50), avec une sortie d'eau potable (73) qui est connectée au raccord de filtrat (56), avec une unité de commande (30) qui commande la pompe de filtration (18) dans un fonctionnement de filtration, afin de presser l'eau brute à travers l'élément de filtre (50), avec un organe de commande réglable à trois voies (34), qui présente un premier, un deuxième, et un troisième raccord de soupape (58, 60, 62), et avec une sortie d'eau brute séparée (68), le premier raccord de soupape (58) étant connecté au premier raccord d'eau brute (54) de l'unité de filtre (14), le deuxième raccord de soupape (60) étant connecté à la sortie d'eau brute (68), et le troisième raccord de soupape (62) étant connecté à une première conduite d'eau brute (46) qui conduit de la pompe de filtration (18) au deuxième raccord d'eau brute (52) de l'unité de filtre (14),
- filtration de l'eau brute avec l'installation mobile de traitement de l'eau (10) dans le fonctionnement de filtration jusqu'à un état de fonctionnement défini qui requiert un nettoyage spécial de l'élément de filtre (50),
- court-circuitage de l'entré d'eau brute (92) et de la sortie d'eau brute (68) avec une troisième conduite d'eau brute (98), afin d'établir un chemin de circulation depuis l'entrée d'eau brute (92) par le biais de la pompe de filtration (18), du deuxième et du premier raccord d'eau brute (52, 54), et de l'organe de commande à trois voies (34) jusqu'à la sortie d'eau brute (68), et
- fonctionnement de la pompe de filtration (18) afin de nettoyer l'élément de filtre (50) avec de l'eau brute non filtrée en fonctionnement de circulation.
